# EUROPÄISCHE PATENTSCHRIFT

(11) **EP 2 646 280 B1**
(45) Veröffentlichungstag und Bekanntmachung des Hinweises auf die Patenterteilung: **17.08.2016**
(21) Anmeldenummer: 11776186.6
(22) Anmeldetag: 28.10.2011
(51) Int. Cl.: B60N 2/08

(54) **VERFAHREN ZUM HERSTELLEN EINER ARRETIERVORRICHTUNG UND ARRETIERVORRICHTUNG EINER LÄNGSVERSTELLEINRICHTUNG EINES FAHRZEUGSITZES**
METHOD FOR PRODUCING A LOCKING DEVICE AND A LOCKING DEVICE FOR A LONGITUDINAL ADJUSTMENT DEVICE OF A VEHICLE SEAT
PROCÉDÉ DE PRODUCTION DE MÉCANISME DE VERROUILLAGE ET MÉCANISME DE VERROUILLAGE POUR LE DISPOSITIF DE DÉPLACEMENT LONGITUDINAL D'UN SIÈGE DE VÉHICULE

(30) Priorität: 02.12.2010 DE 102010053044
(43) Veröffentlichungstag der Anmeldung: 09.10.2013
(73) Patentinhaber: Johnson Controls Metals and Mechanisms GmbH & Co. KG, 42699 Solingen (DE)
(72) Erfinder: HOPPE, Jens, 42853 Remscheid (DE); URBAN, Daniel, 40625 Düsseldorf (DE); SPECK, Axel, 42781 Haan-Gruiten (DE)
(74) Vertreter: Bauer, Wulf
(86) Internationale Anmeldenummer: PCT/EP2011/068997
(87) Internationale Veröffentlichungsnummer: WO 2012/072350

(56) Entgegenhaltungen:
- DE-U1- 29 700 866
- DE-U1- 29 910 720
- DE-U1-202006 004 934

## Beschreibung

Die Erfindung bezieht sich auf ein Verfahren zum Herstellen einer Arretiervorrichtung einer Längsverstelleinrichtung eines Fahrzeugsitzes nach dem Oberbegriff des Patentanspruchs 1. Ein derartiges Verfahren ist aus der DE29910720U bekannt. Sie bezieht sich zudem auf eine solche Arretiereinrichtung, bei der sich das Verfahren anwenden lässt.

Nach diesem Verfahren werden Arretiervorrichtungen hergestellt, wie sie beispielsweise aus der EP 1 316 465 B1 bekannt sind. Weitere Arretiervorrichtungen sind bekannt aus US 4,189,957 A, DE 29 700 866 U1, DE 299 10 720 U1, DE 42 42 895 C1 und GB 2 355 399 A. Aus mehreren dieser Schriften sind jeweils auch zugehörige Schienenpaare bestehend aus einer Sitzschiene und einer Bodenschiene bekannt, zu derartigen Schienenpaaren wird ergänzend auf die US 5,941,495 A und die US 6,059,248 A verwiesen. In bekannter Weise sind die Schienen in ihrer Längsrichtung gegeneinander verschiebbar, sie sind über geeignete Führungsmittel in Anlage. Diese Längsverschiebung wird durch die Arretiervorrichtung normalerweise blockiert und bei Betätigung der Arretiervorrichtung freigegeben.

Nach dem Stand der Technik werden derartige Arretiervorrichtungen zusammen mit den Schienen wie folgt hergestellt: Zunächst werden die Einzelteile hergestellt. Dann wird die Arretiervorrichtung teilweise in der Sitzschiene montiert. Hierzu wird das Führungsteil mit der Sitzschiene verbunden, dabei befinden sich die Sperrstifte im Führungsteil. Häufig hat die Sitzschiene Öffnungen, die mit den Führungsbohrungen des Führungsteils fluchten. In diesen Öffnungen und in den Führungsbohrungen befinden sich die einzelnen Sperrstifte. Nach der Montage des Führungsteils sind die Sperrstifte gefangen, sie können nicht mehr einzeln entnommen werden. Jeder Sperrstift hat eine eigene Feder, die ihn in die Einrastposition vorbelastet. Bis zu diesem Montagezustand ist die Bodenschiene noch nicht mit der Sitzschiene verbunden. Die Sperrstifte sind noch zugänglich. Ist erst einmal die Bodenschiene mit der Sitzschiene verbunden, ist der Zugang zu den Sperrstiften sehr eingeschränkt. Daher erfolgt das Einfetten der Sperrstifte und/oder der Öffnungen und der Führungsbohrungen vor dem Anbringen der Bodenschiene und möglichst auch vor der Montage der Sperrstifte in den Führungsbohrungen und den Öffnungen.

Wenn die Sperrstifte vor dem Einbringen in die zugehörige Öffnung und zugehörige Führungsbohrung eingefettet werden, gelingt es nicht immer, dieses Fett in den Bereich zu transportieren, wo es tatsächlich gebraucht wird. Erfolgt das Einfetten schon im eingesetzten Zustand der Sperrstifte, ist der Zugang zu allen Flächen der Sperrstifte beschränkt und nicht immer möglich. Ein Einfetten ist notwendig, weil schwergängige Sperrstifte einen Benutzer zu einer fehlerhaften Bedienung verleiten können, weil Geräusche auftreten können und die Betätigungskräfte für die beiden Arretiereinrichtungen einer Längsverstellvorrichtung eines Fahrzeugsitzes und auch im Vergleich mit den Längsverstellvorrichtungen anderer Fahrzeugsitze unterschiedlich sein können. Gewünscht werden eine Betätigungskraft, die innerhalb vorgegebener Grenzen liegt und ein Geräuschverhalten, das möglichst gering ist und ebenfalls innerhalb vorgebbarer Grenzwerte liegt.

Hier setzt nun die Erfindung ein. Sie hat sich zur Aufgabe gemacht, den Vorgang des Einfettens von Sperrstiften und ihren Führungsteilen zu verbessern, homogener durchzuführen und dadurch das Betätigungsverhalten der Sperrstifte hinsichtlich Kraft und Geräusch zu verbessern, insbesondere zu minimieren.

Diese Aufgabe wird gelöst durch das Verfahren mit den Merkmalen des Anspruchs 1. Die Aufgabe wird schließlich durch eine Arretiervorrichtung mit den Merkmalen des Anspruchs 8 gelöst. Erfindungsgemäß werden die Sperrstifte während des Einfettens und/oder nach dem Einfetten gedreht. Sie werden um ihre Längsachse gedreht. Da die Sperrstifte rund sind, können sie innerhalb der Führungsbohrung und der gegebenenfalls vorhandenen Öffnung gedreht werden. Wenn die Sperrstifte während des Einfettens gedreht werden, hat dies den Vorteil, dass die Sperrstifte rundum eingefettet werden können. Wenn sie nach dem Einfetten gedreht werden, hat dies den Vorteil, dass sich das Fett innerhalb der Führungen, also der Führungsbohrungen und ggf. der Öffnungen gut verteilen kann.

Eine Drehbewegung wird vorzugsweise in das obere Betätigungsende des Sperrstiftes eingeleitet. Dieses ragt bei einigen Arretiervorrichtungen, z.B. derjenigen nach der DE 42 42 895 C1, über die Sitzschiene nach oben vor und kann reibschlüssig oder formschlüssig erfasst werden. Vorzugsweise wird die Drehbewegung formschlüssig eingeleitet. Hierzu hat in einer bevorzugten Ausbildung das obere Betätigungsende einen Unrund. Der Unrund kann beispielsweise eine unrunde Ausnehmung in Form eines Innensechskants oder dergleichen sein, wie dies für Schrauben bekannt ist. Es kann aber auch ein äußerer Unrund sein, wie er beispielsweise bei Sechseck-Schraubenköpfen bekannt ist. Die zugehörige Drehvorrichtung, auch Drehantrieb genannt, hat ein Drehwerkzeug, das formmäßig komplementär zur Ausbildung des Unrunds angepasst ist. Bei einem Innensechskannt ist das Drehwerkzeug beispielsweise ein Stift mit Sechskant-Querschnitt.

Bei Sperrstiften und Arretiereinrichtungen, die so eingebaut sind, dass der axiale Weg zum Betätigungsende versperrt ist, ist es möglich, das Betätigungsende ist einer Verzahnung auszubilden. Das Drehwerkzeug der Drehvorrichtung ist dann ein entsprechend ausgebildetes Zahnrad, über das die Drehung seitlich eingeleitet wird.

Die Erfindung hat den Vorteil, dass die Betätigungskraft der Arretiervorrichtung einerseits deutlich verringert werden kann, andererseits die Streuung der Betätigungskraft zwischen einzelnen Arretiereinrichtungen ausgesprochen gering gehalten werden kann. Das Geräuschverhalten wird positiv beeinflusst. Geräusche, die insbesondere kurz nach der Montage und insbesondere bei fabrikneuen Fahrzeugen auftreten, werden erheblich verringert.

Es ist vorteilhaft, wenn während des Einfettens die Sperrstifte der Arretiervorrichtung alle in der gleichen Position sind. Sie können beispielsweise in der komplett hochgezogenen Position sein. Vorzugsweise ist die Entriegelungsklappe, die gemeinsam alle Sperrstifte einer Arretiervorrichtung entriegeln kann, noch nicht montiert, wenn das Einfetten erfolgt. Es kann ein Hilfswerkzeug verwendet werden, dass alle Sperrstifte in die Freigabeposition zieht oder drückt, also dieselbe Funktion die betätigte Entriegelungsklappe hat. Es ist aber auch möglich, die Sperrstifte alle in ihrer tiefsten Position zu lassen und in diesem Zustand einzufetten. Es können alle Sperrstifte die tiefste Position einnehmen, solange noch keine Rastenleiste montiert ist. Da das Einfetten vorzugsweise vor der Montage der Bodenschiene erfolgt und die Bodenschiene mit der Rastenleiste verbunden ist, ist dieser Zustand ohne Hilfsmittel erreichbar.

In einer vorzugsweisen Weiterbildung wird vorgeschlagen, die Sperrstifte während des Einfettens und/oder danach auch zusätzlich axial zu bewegen. Hierzu ist zusätzlich zur Drehvorrichtung auch ein Hubantrieb vorgesehen. Dieser kann mit der Drehvorrichtung kombiniert sein und am Betätigungsende angreifen.

Die Drehvorrichtung und/oder der Hubantrieb kann auch am Eingreifbereich angreifen. Der Hubantrieb kann die Aufgabe des soeben beschriebenen Hilfsteils übernehmen. Vorzugsweise werden die Sperrstifte über ihre gesamte Länge eingefettet, jedenfalls über den Teilbereich ihrer Länge, der zugänglich ist. Dies umfasst auch den sich verjüngenden unteren Endbereich, wo der Kontakt mit der Rastenleiste stattfindet. Die Rastenleiste selbst wird vorzugsweise nicht eingefettet.

Als Fett wird ein Material verwendet, das möglichst gute Hafteigenschaften hat. Es wird ein klebfähiges Fett verwendet. Es soll so gut wie möglich an dem Material der Sperrstifte sowie den Führungsbohrungen und Öffnungen haften. Das Haftvermögen soll in einem Bereich liegen, wie es heute für sogenannte Haftkleber, die auf Papier verwendet werden, vorliegt. Verwendet werden Haftkleber oder Kontaktkleber als Zusatz zum Fett. Infrage kommen hierfür Polyisobutylene, Polyvinylether, Polyacrylether und Natur- bzw. Synthesekautschuke. Dabei sollen die Schmiereigenschaften ausreichend sein, zumindest sollen sie so gut sein, wie die bisher nach dem Stand der Technik verwendeten Schmierstoffe, vorzugsweise besser als diese.

Die Sperrstifte werden mindestens einmal vollständig gedreht, vorzugsweise etwas mehr. Die Hubvorrichtung hat vorzugsweise einen Hub, der dem späteren Arbeitshub des Sperrstiftes entspricht. Als Drehvorrichtungen können übliche Motoren eingesetzt werden, beispielsweise Elektromotoren mit Untersetzungsgetriebe, Bohrmaschinen und dergleichen, es können aber auch hydraulische Drehvorrichtungen verwendet werden. Bei Sperrstiften ohne Unrund empfiehlt sich ein Drehwerkzeug der Drehvorrichtung, das das Betätigungsende oder den Eingreifbereich des Sperrstiftes übergreift. Es hat beispielsweise die Form eines Napfes oder Kegels. Diese können aus einem elastischen Material, beispielsweise Hartgummi, gefertigt sein.

Vorzugsweise wird das Fett auf die Sperrstifte und die anderen Teile aufgesprüht. Hierzu ist eine Sprühvorrichtung vorgesehen, die möglichst nur auf die Bereiche gerichtet ist, wo ein Auftrag erfolgen soll. Anstelle einer Sprühvorrichtung können auch andere Mittel eingesetzt werden, die ein flächiges Auftragen ermöglichen. So kann das Schmiermittel auch mittels eines Schwammes, eines Lappens, eines Pinsels oder dergleichen aufgebracht werden. Angestrebt wird ein gleichmäßiger, dünner, vollflächiger Auftrag.

Die Arretiervorrichtung nach Anspruch 8 ist dadurch besonders für das erfindungsgemäße Verfahren geeignet, dass die Sperrstifte einen Unrund aufweisen und ihre Rotation über ein Drehwerkzeug eingeleitet wird, das axial oder seitlich angesetzt wird und formschlüssig die Drehbewegung überträgt. In einer Alternative ist es möglich, den Unrund auch in anderen Stellen des Sperrstiftes als am Betätigungsende vorzusehen, so kann er auch beispielsweise am untersten Ende des Eingreifbereichs ausgebildet sein.

Weitere Vorteile und Merkmale der Erfindung ergeben sich aus den übrigen Ansprüchen sowie der folgenden Beschreibung von nicht einschränkend zu verstehenden Ausführungsbeispielen der Erfindung, die unter Bezugnahme auf die Zeichnung näher erläutert werden. In dieser Zeichnung zeigen:
- Fig. 1:: eine schnittbildliche Darstellung einer Arretiereinheit mit drei Sperrstiften, einer Sitzschiene und einem Führungsteil, ohne Entriegelungsklappe, ohne Rastenleisteund ohne Bodenschiene,
- Fig. 2:: eine Darstellung einer Arretiereinheit wie Fig. 1, jedoch für ein zweites Ausführungsbeispiel,
- Fig. 3:: eine schnittbildliche Darstellung einer Arretiereinheit mit drei Sperrstiften, einer Sitzschiene, einer Bodenschiene einschließlich Rastenleiste, einem Führungsteil und einer Entriegelungsklappe,
- Fig. 4:: eine perspektivische Darstellung der Arretiereinheit einschließlich der Schienen nach Figur 3 mit Blick von oben auf die Sitzschiene, und
- Fig. 5:: eine perspektivische Darstellung eines Sperrstiftes mit Ansicht von schräg oben auf ein Betätigungsende.

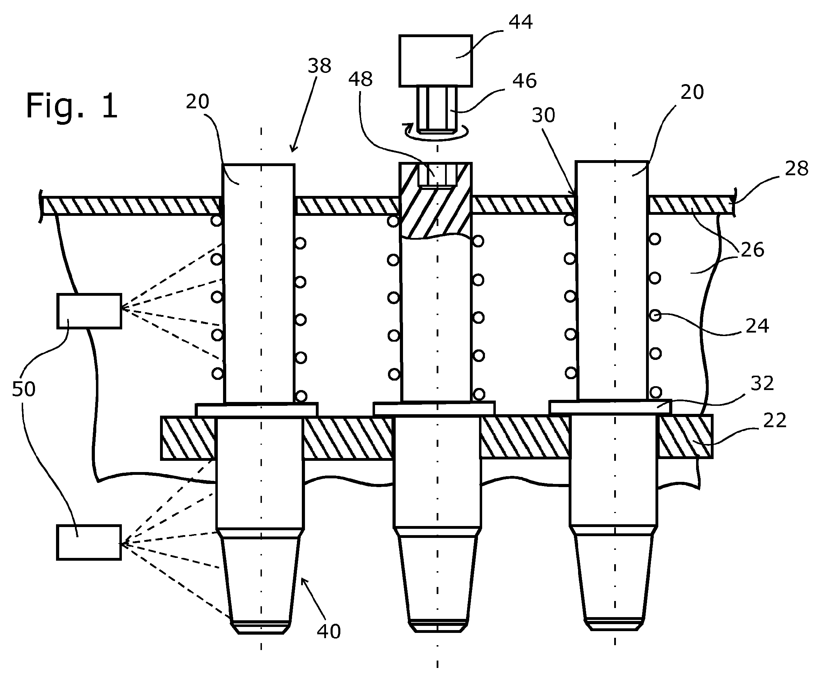

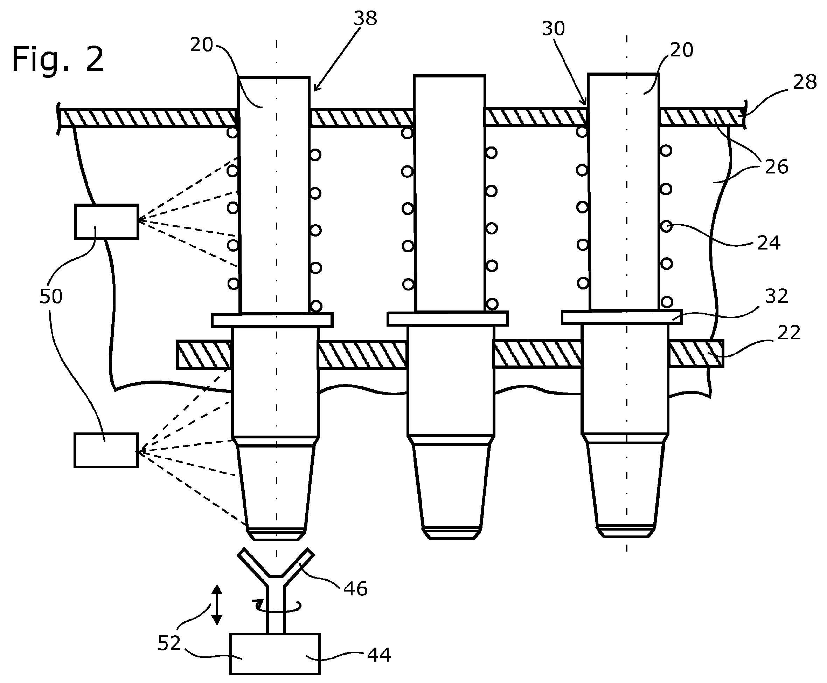

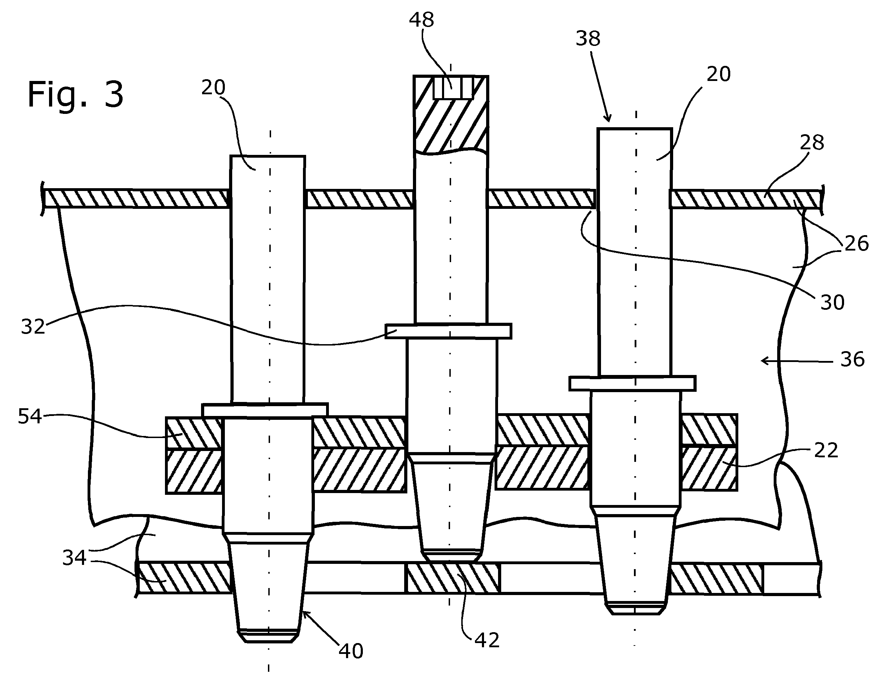

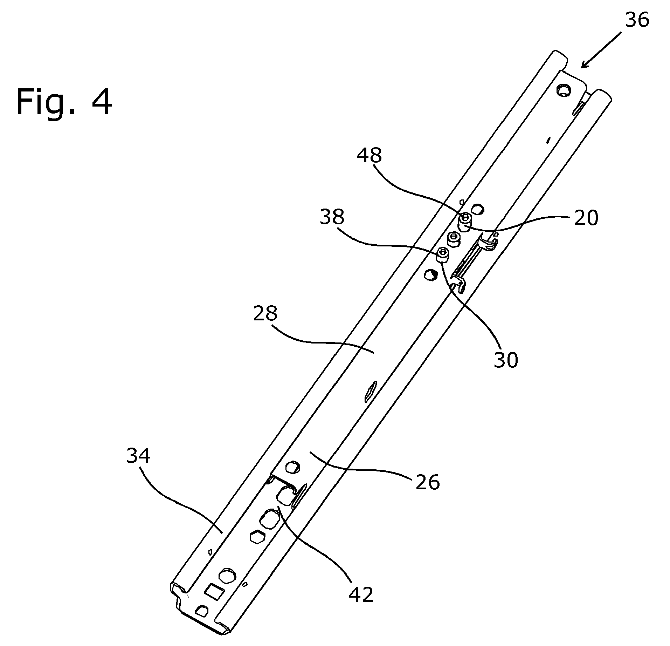

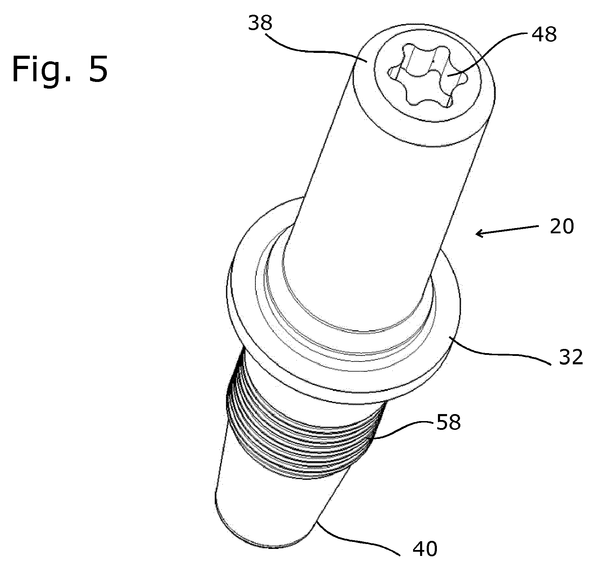

In Figur 1 ist ein erstes Ausführungsbeispiel gezeigt, anhand dieses Ausführungsbeispiels wird im Folgenden das Verfahren erläutert werden, die Vorrichtung wird erläutert werden und auch die Arretiervorrichtung selbst wird beschrieben werden. Die weiteren Ausführungsbeispiele, nämlich das zweite Ausführungsbeispiel nach Figur 2, das dritte Ausführungsbeispiel nach den Figuren 3 und 4 und das vierte Ausführungsbeispiel nach Figur 5 werden anschließend beschrieben, sie werden nur insoweit ausführlich erläutert, als sie sich vom ersten Ausführungsbeispiel unterscheiden.

Die Anmelderin behält sich vor, beliebige Merkmale und Untermerkmale aus der Beschreibung, dort auch aus einzelnen Sätzen und Teilsätzen, sowie aus den Ansprüchen, dort auch Untermerkmale und Teilmerkmale, beliebig miteinander zu kombinieren.

Figur 1 zeigt eine unvollständige Arretiervorrichtung, sie hat drei Sperrstifte 20, ein Führungsteil 22 mit Führungsbohrungen, wobei für jeden Sperrstift 20 eine Führungsbohrung vorgesehen ist, und Federn 24, wobei wiederum für jeden Sperrstift 20 eine eigene Feder 24 vorgesehen ist. Die insoweit beschriebene Arretiereinrichtung ist mit einer Sitzschiene 26 verbunden. Konkret ist das Führungsteil 22 mit einem Seitenflansch der Sitzschiene 26, der in der Fig. 1 ersichtlich ist, verbunden, z.B. durch stumpfes Anschweißen. Von der Sitzschiene 26 ist zudem ein oberer Flansch 28 gezeigt, er verläuft im Einbauzustand waagerecht. In ihm befinden sich drei Öffnungen 30, wobei wiederum für jeden Sperrstift 20 eine Öffnung 30 vorgesehen ist. Die Sperrstifte haben einen Bund 32, mit diesem liegen sie in der gezeigten schnittbildlichen Darstellung nach Figur 1 auf der Oberfläche des Führungsteils 22 auf. Sie werden durch die Federn 24 in diese Lage vorbelastet. Jede Feder 24 stützt sich zwischen dem oberen Flansch 28 und dem Bund 32 eines Sperrstiftes 20 ab. Es handelt sich um Schraubenfedern, die auf Druck ausgelegt sind.

Vorzugsweise werden Schienenpaare eingesetzt, bei denen die Sitzschiene 26 und eine Bodenschiene 34 (siehe Figur 3) einen länglichen Kanal 36 begrenzen, siehe z.B. die oben genannten US 5,941,495 A und US 6,059,248 A. In diesem Kanal 36 befinden sich das Führungsteil 22 und die Federn 24, zudem befindet sich im Kanal 36 der überwiegende Teil der Sperrstifte 20. Bei den bevorzugt verwendeten Schienenpaaren hat jede Schiene 26, 34 im Wesentlichen nur einen langen Seitenflansch, der andere Seitenflansch ist deutlich kürzer als der lange Seitenflansch, siehe Fig. 4. Die zwischen den Schienen 26, 34 angeordneten Führungsmittel, beispielsweise Kugeln, liegen auf einer Diagonalen des Schienenprofils einander gegenüber. Dadurch sind die Sperrstifte 20 seitlich zugänglich, wie dies die Figuren 1 bis 3 zeigen. Erst die Bodenschiene 34 verdeckt diesen Zugang.

Die Sperrstifte 20 sind nach der Lehre der DE 10 2010 043 025 ausgebildet. Alle in dieser Patentanmeldung enthaltenen Informationen und Offenbarungen gelten auch für die vorliegende Anmeldung. Die Sperrstifte 20 sind rund, sie können somit in den Führungsbohrungen gedreht werden, ohne dass sich ein anderes Bild ergibt. Die Sperrstifte 20 haben ein oberes Betätigungsende 38, das in den gezeigten Ausführungsbeispielen oben aus der Sitzschiene 26 herausschaut, und einen unteren Eingreifbereich 40. Dort verjüngt sich der Sperrstift 20 zu einem unteren Ende hin. Der Eingreifbereich kommt in Kontakt mit einer Rastenleiste 42, diese ist aus Figur 3 ersichtlich. Die Sperrstifte 20 drehen um ihre eigene Achse.

In Figur 1 ist eine Drehvorrichtung 44 gezeigt, sie befindet sich oberhalb des mittleren Sperrstiftes 20 .Ähnliche Drehvorrichtungen sind auch für die anderen Sperrstifte 20 vorgesehen. Die Drehvorrichtung 44 hat ein Drehwerkzeug 46 bzw. Bit, das im Sinne des umlaufenden Pfeils drehangetrieben wird. Es hat Sechskantform. Im Betätigungsende 38 ist ein Unrund 48 ausgebildet. Er ist ausgeführt wie bei einer Innensechskantschraube. Formmäßig passt der Unrund 48 mit dem Drehwerkzeug 46 zusammen. Ist das Drehwerkzeug 46 in den Unrund 48 eingesteckt, kann der Sperrstift 20 angetrieben werden. Der Unrund kann beliebige Form haben, z.B. Schlitz, Kreuzschlitz, Innensechskant, Außensechskant, Vielzahn innen oder außen usw..

Dem linken Sperrstift 20 sind zwei Sprühvorrichtungen 50 zugeordnet. Aus ihnen wird Fett auf die zugewandte Fläche des Sperrstifts 20 aufgetragen. Während dieses Auftragens wird die Drehvorrichtung 44 betätigt, der Sperrstift 20 wird mindestens einmal gedreht. Dadurch wird die gesamte, zugewandte Oberfläche des Sperrstiftes 20 mit einer Fettschicht bzw. Schmiermittelschicht versehen. Auch der Eingreifbereich 40 wird so behandelt, wie aus Figur 1 ersichtlich ist. Die Sprühvorrichtungen 50 sind so angeordnet und ggf. durch Blenden in ihrer Sprühwirkung begrenzt, dass jeweils nur die zu behandelnden Flächen des Sperrstiftes 20 erreicht werden. Bevorzugt ist für jeden Sperrstift 20 mindestens eine Sprühvorrichtung 50 vorgesehen.

In einer Verbesserung wird anschließend an den soeben beschriebenen Verfahrensschritt des Einfettens folgender Schritt durchgeführt: Die Sperrstifte 20 werden aus der gezeigten Position gemäß Figur 1 über einen geeigneten Hubantrieb 52 soweit angehoben, dass der zuvor durch das Führungsteil 22 abgedeckte Teilbereich der Sperrstifte 20 sichtbar wird. Dann wird wiederum ein Sprühvorgang mit mindestens einmaligem Drehen des Sperrstiftes 20 durchgeführt. Nun ist auch die Feder 24 verschoben und werden die zuvor von der Feder 24 überdeckten Bereiche benetzt.

Nachdem der mindestens eine Schritt des Einfettens durchgeführt ist, kann die Montage weitergeführt werden. Es wird nun eine Entriegelungsklappe 54 montiert, wie sie aus Figur 3 ersichtlich ist. Es wird zudem die Bodenschiene 34 montiert, so dass der Kanal 36 nun seitlich abgeschlossen ist. Die Bodenschiene 34 weist eine Rastenleiste 42 auf, die nach dem Stand der Technik ausgebildet ist.

Im zweiten Ausführungsbeispiel nach Figur 2 greift die Drehvorrichtung 44 nicht formschlüssig am Sperrstift 20 an, vielmehr reibschlüssig. Wiederum wird die Drehbewegung gleichachsig eingeleitet. Als Drehwerkzeug 46 wird nun ein kelchförmiges Teil bzw. V-förmiges Teil eingesetzt, das in Kontakt mit dem Eingreifbereich 40 kommt. In der Ausführung nach Figur 2 ist die Drehvorrichtung 44 zugleich als Hubantrieb 52 ausgeführt, verwiesen wird auf den Doppelpfeil. Im Zustand, wie ihn Figur 2 zeigt, hat die Hubvorrichtung den linken Sperrstift 20 bereits etwas gegen die Feder 24 angehoben, man erkennt dies am Abstand des Bundes 32 vom Führungsteil 22. Es werden wieder zwei Sprühvorrichtungen 50 eingesetzt, die die exponierten Oberflächen mit Fett besprühen. Wiederum wird mindestens eine volle Umdrehung durchgeführt. Es kann noch eine weitere Umdrehung in einer anderen axialen Position des Hubantriebs 52 durchgeführt werden. Es können auch Hubantrieb und Drehvorrichtung 44 gemeinsam gleichzeitig betätigt werden, wodurch es zu einem eher schraubenlinienförmigen Auftrag des Fettes kommt.

Figur 3 zeigt eine fertiggestellte Arretiervorrichtung, allerdings sind aus Vereinfachungsgründen die Federn 24 nicht dargestellt. Gezeigt ist ein Rastzustand, wie er typisch für die Arretiereinheit ist. Die beiden äußeren Sperrstifte 20 liegen jeweils an einer Raste der Rastenleiste 42 an, der mittlere Sperrstift 20 liegt oben auf einer Raste auf und ist passiv. Die Entriegelungsklappe 54 kann soweit nach oben bewegt werden, dass auch der mittlere Sperrstift 20 zumindest etwas angehoben wird und von der Rastenleiste 42 freikommt.

In der Darstellung nach Figur 4 ist die Entriegelungsklappe 54 weggelassen worden.

Figur 5 zeigt eine perspektivische Ansicht der verwendeten Sperrstifte 20. Diese haben einen Rillenbereich 58, er befindet sich bei den Sperrstiften 20, die in Eingriff mit der Rastenleiste 42 sind, im Bereich der Führungsbohrung und ragt vorzugsweise auch nach unten über das untere Ende der Führungsbohrung hinaus. In der Ausführung nach Figur 5 ist der Unrund 48 nicht mehr sechseckförmig, sondern eher sternförmig. Jede beliebige Form des Unrunds 48 ist möglich. Der Unrund 48 kann nicht nur als Innenform, sondern auch als Außenform, z.B. außen Sechskant, ausgebildet sein. Es ist auch möglich, andere Bereiche des Sperrstiftes 20 als Unrund 48 auszubilden. So kann beispielsweise der Bund 32 eine Außenverzahnung wie ein normales Zahnrad aufweisen. An dieser Außenverzahnung kann der Drehantrieb über die Drehvorrichtung 44 angreifen, diese hat ein geeignetes Zahnrad, das mit dem Bund 32 kämmt. Dabei können mit einem Zahnrad zwei gezahnte Bunde 32 angetrieben werden.

Der Hubantrieb 52 kann auch als mechanisches Werkzeug ausgeführt sein, beispielsweise in Form einer Gabel, die mit ihren Zinken zwischen Führungsteil 22 und Bund 32 greift und die ähnlich der noch nicht montierten Entriegelungsklappe 54 wirkt.

## Patentansprüche

1. Verfahren zum Herstellen einer Arretiervorrichtung einer Längsverstelleinrichtung eines Fahrzeugsitzes mit folgenden Verfahrensschritten:
- Herstellen einer Arretiereinrichtung, die mehrere, unabhängig voneinander einrastbare und gemeinsam ausrastbare, runde Sperrstifte (20), mindestens ein Führungsteil (22) und eine Rastenleiste (42) aufweist, wobei das Führungsteil (22) einer Sitzschiene (26) zugeordnet ist und Führungsbohrungen für die Sperrstifte (20) aufweist, die Rastenleiste (42) einer Bodenschiene (34) zugeordnet ist, und die Sperrstifte (20) ein oberes Betätigungsende (38) und einen unteren, mit der Rastenleiste (42) zusammenwirkenden Eingreifbereich (40) aufweisen, und
- Einfetten der Sperrstifte (20) während des Schrittes des Herstellens oder im Anschluss daran,
**dadurch gekennzeichnet, dass** während und/oder nach dem Schritt des Einfettens jeder einzelne Sperrstift (20) durch eine Drehvorrichtung (44) drehangetrieben wird.

2. Verfahren nach Anspruch 1, **dadurch gekennzeichnet, dass** die Drehvorrichtung (44) jeweils mindestens eine volle Umdrehung des Sperrstiftes (20), vorzugsweise mindestens zwei und insbesondere mindestens drei volle Umdrehungen des Sperrstiftes (20) durchführt.

3. Verfahren nach einem der vorangegangenen Ansprüche, **dadurch gekennzeichnet, dass** die Drehvorrichtung (44) ein Drehwerkzeug (46) aufweist und dass im Betätigungsende (38) des Sperrstiftes (20) ein Unrund (48) vorgesehen ist, der mit dem Drehwerkzeug (46) zusammenwirkt.

4. Verfahren nach einem der vorangegangenen Ansprüche, **dadurch gekennzeichnet, dass** der Schritt des Einfettens vor der Montage der Bodenschiene (34) durchgeführt wird.

5. Verfahren nach einem der vorangegangenen Ansprüche, **dadurch gekennzeichnet, dass** der Schritt des Einfettens durch Aufsprühen eines Fettes mittels einer Sprühvorrichtung (50) durchgeführt wird.

6. Verfahren nach einem der vorangegangenen Ansprüche, **dadurch gekennzeichnet, dass** zusätzlich zur Drehung des Sperrstiftes (20) durch die Drehvorrichtung (44) auch eine axiale Bewegung des Sperrstiftes (20) durch einen Hubantrieb (52) erfolgt.

7. Verfahren nach einem der vorangegangenen Ansprüche, **dadurch gekennzeichnet, dass** eine Drehvorrichtung (44) mit dem Sperrstift (20) in Kontakt gebracht wird und den Sperrstift (20) in Drehung versetzt, vorzugsweise mit einem Ende und insbesondere mit dem Betätigungsende (38) des Sperrstiftes (20) in Kontakt gebracht wird.

8. Arretiervorrichtung einer Längsverstelleinrichtung eines Fahrzeugsitzes, die mehrere, unabhängige voneinander einrastbare und gemeinsam ausrastbare, runde Sperrstifte (20), ein Führungsteil (22) und eine Rastenleiste (42) aufweist, wobei das Führungsteil (22) einer Sitzschiene (26) zugeordnet ist und mehrere Führungsbohrungen für die Sperrstifte (20) aufweist, die Rastenleiste (42) einer Bodenschiene (34) zugeordnet ist und die Sperrstifte ein oberes Betätigungsende (38) und einen unteren, mit der Rastenleiste (42) zusammenwirkenden Eingreifbereich (40) aufweisen, **dadurch gekennzeichnet, dass** jeder Sperrstift einen Unrund (48) aufweist, der mit einem Drehwerkzeug (46) einer Drehvorrichtung (44) zusammenwirken kann, und dass der Unrund (48) vorzugsweise an einem Ende des Sperrstiftes (20) und insbesondere am Betätigungsende (38) des Sperrstiftes (20) vorgesehen ist.

## Claims

1. A method for producing a locking device of a longitudinal adjustment device of a vehicle seat comprising the following process steps:
- producing a locking device comprising several round locking pins (20) that can be latched in independently of one another and unlatched together, at least one guide part (22) and a notched strip (42), wherein the guide part (22) is allocated to a seat rail (26) and has guide bores for the locking pins (20), the notched strip (42) is allocated to a floor rail (34), and the locking pins (20) have an upper actuating end (38) and a lower engagement region (40) cooperating with the notched strip (42), and
- greasing the locking pins (20) during the production step or subsequent thereto,
**characterized in that** each individual locking pin (20) is rotationally driven by a rotating device (44) during and/or subsequent to the greasing step.

2. The method according to claim 1, **characterized in that** the rotating device (44) in each case carries out at least one complete turn of the locking pin (20), preferably at least two, and in particular at least three complete turns of the locking pin (20).

3. The method according to any one of the preceding claims, **characterized in that** the rotating device (44) comprises a rotating tool (46), and that a non-circular portion (48) cooperating with the rotating tool (46) is provided in the actuating end (38) of the locking pin (20).

4. The method according to any one of the preceding claims, **characterized in that** the greasing step is carried out prior to the assembly of the floor rail (34).

5. The method according to any one of the preceding claims, **characterized in that** the greasing step is carried out by spraying on a grease by means of a spraying device (50).

6. The method according to any one of the preceding claims, **characterized in that**, in addition to the rotation of the locking pin (20) by means of the rotating device (44), an axial movement of the locking pin (20) by means of a lift drive unit (52) also takes place.

7. The method according to any one of the preceding claims, **characterized in that** a rotating device (44) is brought into contact with the locking pin (20) and sets the locking pin (20) into rotation, is preferably brought into contact with an end, and in particular with the actuating end (38), of the locking pin (20).

8. A locking device of a longitudinal adjustment device of a vehicle seat, comprising several round locking pins (20) that can be latched in independently of one another and unlatched together, a guide part (22) and a notched strip (42), wherein the guide part (22) is allocated to a seat rail (26) and has several guide bores for the locking pins (20), the notched strip (42) is allocated to a floor rail (34), and the locking pins have an upper actuating end (38) and a lower engagement region (40) cooperating with the notched strip (42), **characterized in that** each locking pin comprises a non-circular portion (48) that can cooperate with a rotating tool (46) of a rotating device (44), and that the non-circular portion (48) is preferably provided at an end of the locking pin (20), particularly on the actuating end (38) of the locking pin (20).

## Revendications

1. Procédé de fabrication d'un dispositif d'arrêt d'un dispositif de réglage longitudinal d'un siège de véhicule, comprenant les étapes de procédé suivantes consistant à:
- fabriquer un dispositif d'arrêt qui présente une pluralité de goupilles de blocage (20) rondes qui peuvent être enclenchées les unes indépendamment des autres et désenclenchées en commun, au moins une partie de guidage (22) et une barre à crans (42), ladite partie de guidage (22) étant associée à un rail de siège (26) et présentant des perçages de guidage pour les goupilles de blocage (20), ladite barre à crans (42) étant associée à un rail de fond (34) et les goupilles de blocage (20) présentant une extrémité supérieure de commande (38) et une zone inférieure d'engagement (40) agissant de concert avec ladite barre à crans (42), et à
- graisser les goupilles de blocage (20) durant l'étape de fabrication ou à la suite de celle-ci,
**caractérisé par le fait que**, durant et/ou après l'étape de graissage, chaque goupille de blocage (20) individuelle est entraînée en rotation par un dispositif de rotation (44).

2. Procédé selon la revendication 1, **caractérisé par le fait que** le dispositif de rotation (44) effectue respectivement au moins un tour complet de la goupille de blocage (20), de préférence au moins deux et en particulier au moins trois tours complets de la goupille de blocage (20).

3. Procédé selon l'une quelconque des revendications précédentes, **caractérisé par le fait que** le dispositif de rotation (44) présente un outil de rotation (46) et qu'un faux-rond (48) est prévu dans ladite extrémité de commande (38) de la goupille de blocage (20), qui agit de concert avec ledit outil de rotation (46).

4. Procédé selon l'une quelconque des revendications précédentes, **caractérisé par le fait que** l'étape de graissage est mise en oeuvre avant le montage du rail de fond (34).

5. Procédé selon l'une quelconque des revendications précédentes, **caractérisé par le fait que** l'étape de graissage est réalisée en appliquant par pulvérisation une graisse au moyen d'un dispositif pulvérisateur (50).

6. Procédé selon l'une quelconque des revendications précédentes, **caractérisé par le fait que**, en plus de la rotation de la goupille de blocage (20) réalisée par ledit dispositif de rotation (44), la goupille de blocage (20) est également déplacée axialement par une commande de course (52).

7. Procédé selon l'une quelconque des revendications précédentes, **caractérisé par le fait qu'**un dispositif de rotation (44) est mis en contact avec la goupille de blocage (20) et met en rotation la goupille de blocage (20), de préférence est mis en contact avec une extrémité et en particulier avec l'extrémité de commande (38) de la goupille de blocage (20).

8. Dispositif d'arrêt d'un dispositif de réglage longitudinal d'un siège de véhicule, qui présente une pluralité de goupilles de blocage (20) rondes qui peuvent être enclenchées les unes indépendamment des autres et désenclenchées en commun, une partie de guidage (22) et une barre à crans (42), ladite partie de guidage (22) étant associée à un rail de siège (26) et présentant une pluralité de perçages de guidage pour les goupilles de blocage (20), ladite barre à crans (42) étant associée à un rail de fond (34) et les goupilles de blocage (20) présentant une extrémité supérieure de commande (38) et une zone inférieure d'engagement (40) agissant de concert avec ladite barre à crans (42), **caractérisé par le fait que** chaque goupille de blocage présente un faux-rond (48) qui peut agir de concert avec un outil de rotation (46) d'un dispositif de rotation (44), et que ledit faux-rond (48) est prévu de préférence à une extrémité de la goupille de blocage (20) et en particulier à l'extrémité de commande (38) de la goupille de blocage (20).
